# EUROPÄISCHE PATENTSCHRIFT

(11) **EP 3 381 605 B1**
(45) Veröffentlichungstag und Bekanntmachung des Hinweises auf die Patenterteilung: **27.04.2022**
(21) Anmeldenummer: 18167089.4
(22) Anmeldetag: 04.09.2012
(51) Int. Cl.: B23Q 16/02, B23Q 39/04

(54) **MEHRSPINDELDREHMASCHINE**
MULTIPLE SPINDLE ROTATING MACHINE
TOUR MULTIBROCHE

(30) Priorität: 12.09.2011 DE 102011053504
(43) Veröffentlichungstag der Anmeldung: 03.10.2018
(62) Teilanmeldung aus: 15168675.5
(73) Patentinhaber: Index-Werke GmbH & Co. KG Hahn & Tessky, 73730 Esslingen (DE)
(72) Erfinder: Schumacher, Karl-Heinz, 72760 Reutlingen (DE)
(74) Vertreter: Hoeger, Stellrecht & Partner Patentanwälte mbB

(56) Entgegenhaltungen:
- EP-A1- 0 726 119
- EP-A2- 0 704 276
- DE-A1- 19 504 371
- US-A- 4 665 781

## Beschreibung

Die Erfindung betrifft eine Mehrspindeldrehmaschine umfassend ein Maschinengestell mit einem Spindeltrommelgehäuse, eine in dem Spindeltrommelgehäuse um eine Spindeltrommelachse drehbar gelagerte Spindeltrommel, in welcher eine Vielzahl von Werkstückspindeln um die Spindeltrommelachse herum angeordnet ist, welche ihrerseits um Spindelachsen drehbar sind und mit Werkstückspindelköpfen einem vor einer Frontseite der Spindeltrommel und vor einer Frontseite des Spindeltrommelgehäuses angeordneten Arbeitsraum zugewandt sind, und einen Spindeltrommelantrieb zum Drehen der Spindeltrommel um die Spindeltrommelachse.

Derartige Mehrspindeldrehmaschinen sind aus dem Stand der Technik bekannt, bei diesen ist der Spindeltrommelantrieb in dem Spindeltrommelgehäuse vorgesehen und treibt die Spindeltrommel umfangsseitig an.

Diese Lösung begrenzt jedoch die konstruktiven Freiheitsgrade in der Ausbildung des Spindeltrommelgehäuses. Die US 4 665 781 A offenbart eine Mehrspindeldrehmaschine nach dem Oberbegriff des Anspruchs 1.

Der Erfindung liegt daher die Aufgabe zugrunde, eine Mehrspindeldrehmaschine der gattungsgemäßen Art derart zu verbessern, dass das Spindeltrommelgehäuse optimal für die Notwendigkeiten bei der Bearbeitung der Werkstücke im Arbeitsraum konzipiert werden kann und Restriktionen seitens des Spindeltrommelantriebs entfallen.

Diese Aufgabe wird bei einer Mehrspindeldrehmaschine der eingangs beschriebenen Art erfindungsgemäß dadurch gelöst, dass der Spindeltrommelantrieb auf einer dem Arbeitsraum abgewandten Seite des Spindeltrommelgehäuses und im Abstand von einer Rückseite des Spindeltrommelgehäuses angeordnet ist und dass der Spindeltrommelantrieb zum Antrieb der Spindeltrommel auf diese in einem radial innerhalb der Werkstückspindeln liegenden Innenbereich wirkt, dass der Spindeltrommelantrieb über ein Antriebsverbindungselement auf den Innenbereich der Spindeltrommel zum Antrieb derselben wirkt, das Antriebsverbindungselement einen einen zentralen Durchlasskanal umschließenden Mantelkörper aufweist, dass durch den Durchlass Leitungen zu der Spindeltrommel geführt werden können.

Der Vorteil der erfindungsgemäßen Lösung ist darin zu sehen, dass damit der Spindeltrommelantrieb auf einen Bereich der Spindeltrommel wirkt, der zu keinerlei Restriktionen bei der Ausbildung und Konzeption des Spindeltrommelgehäuses führt, und dass der Spindeltrommelantrieb so weit wie konstruktiv sinnvoll von der Spindeltrommel entfernt angeordnet werden kann und trotzdem eine einfache Drehverbindung zwischen dem Spindeltrommelantrieb und der Spindeltrommel realisiert werden kann.

Prinzipiell könnte der Spindeltrommelantrieb dabei als langgestreckter Wellenmotor oder Hohlwellenmotor ausgebildet sein und noch direkt auf die Spindeltrommel wirken.

Besonders vorteilhaft ist dagegen eine Lösung, bei welcher der Spindeltrommelantrieb auf einer der Frontseite der Spindeltrommel abgewandten Rückseite der Spindeltrommel und im Abstand von der Rückseite der Spindeltrommel angeordnet ist, so dass auch hinsichtlich der Spindeltrommel keine räumlichen Restriktionen durch die Anordnung des Spindeltrommelantriebs resultieren.

Grundsätzlich wäre es beispielsweise denkbar, dass das Antriebsverbindungselement über ein Zwischengetriebe auf die Spindeltrommel wirkt.

Eine konstruktiv besonders einfache und auch hinsichtlich der Präzision des Antriebs vorteilhafte Lösung sieht vor, dass das Antriebsverbindungselement direkt drehfest mit der Spindeltrommel gekoppelt ist.

Grundsätzlich könnte dabei das Antriebsverbindungselement fest mit der Spindeltrommel verbunden sein.

Eine besonders vorteilhafte Lösung sieht jedoch vor, dass das Antriebsverbindungselement drehfest, jedoch kippmomentenfrei mit der Spindeltrommel verbunden ist, das heißt, dass von dem Antriebsverbindungselement keine Kippmomente auf die Spindeltrommel wirken und somit das Antriebsverbindungselement geringfügig gegenüber der Spindeltrommelachse verkippbar ist, wobei die drehfeste Verbindung mit der Spindeltrommel aufrecht erhalten bleibt.

Zweckmäßigerweise ist hierzu vorgesehen, dass das Antriebsverbindungselement mit einem Kippbewegungen relativ zur Spindeltrommelachse zulassenden Gelenk mit der Spindeltrommel drehfest gekoppelt ist.

Ein derartiges Kippbewegungen zulassendes Gelenk lässt beispielsweise eine Verkippung des Antriebsverbindungselements um bis zu +/- 5° zur Spindeltrommelachse zu.

Hinsichtlich der Ausbildung des Antriebsverbindungselements wurden bislang keine näheren Angaben gemacht.

Beispielsweise könnte das Antriebsverbindungselement seitlich der Spindeltrommelachse angeordnet sein.

Eine besonders raumsparende und auch hinsichtlich der Drehmomentübertragung vorteilhafte Lösung sieht dabei vor, dass das Antriebsverbindungselement koaxial zur Spindeltrommelachse ausgebildet und angeordnet ist.

Das heißt, dass das Antriebsverbindungselement eine massive Welle sein kann.

Besonders vorteilhaft ist es jedoch, wenn das Antriebselement als Hohlkörper ausgebildet ist, da sich ein Hohlkörper trotz geringer Masse optimal zur Übertragung von großen Drehmomenten eignet.

Besonders zweckmäßig ist es, wenn das Antriebsverbindungselement als hülsenartiger Hohlkörper ausgebildet ist.

Ein derartiger Hohlkörper kann verschiedene Hohlräume aufweisen, die gegeneinander abgeschlossen sind.

Ein derartiger Mantelkörper kann gitterartig ausgebildet sein und muss nicht notwendigerweise eine geschlossene Mantelfläche aufweisen.

Erfindungsgemäß von Vorteil ist es jedoch, wenn der Mantelkörper drehverwindungssteif ausgebildet ist, das heißt eine derartige Gitterstruktur aufweist, die eine große Steifheit hinsichtlich Drehverwindungen schafft.

Hinsichtlich der geometrischen Gestaltung des Antriebsverbindungselements hat es sich als besonders vorteilhaft erwiesen, wenn das Antriebsverbindungselement einen Außenradius aufweist, der kleiner ist als ein Mindestabstand der Werkstückspindel von der Spindelachse.

Ferner hat es sich als vorteilhaft erwiesen, wenn das Antriebsverbindungselement einen Außenradius aufweist, der kleiner ist als ein Mindestabstand von Spannantrieben der Werkstückspindeln von der Spindelachse.

Damit lässt sich das Antriebsverbindungselement in Gänze einfach an der Spindeltrommel montieren, ohne dass Kollisionen mit den Werkstückspindeln oder den Spannantrieben der Werkstückspindeln auftreten.

Im Zusammenhang mit der bisherigen Erläuterung der einzelnen Ausführungsbeispiele wurde die Ausbildung des Spindeltrommelantriebs und die Kopplung desselben mit dem Antriebsverbindungselement nicht näher spezifiziert.

Eine konstruktiv besonders einfache und vorteilhafte Lösung sieht daher vor, dass das Antriebsverbindungselement mit einem Mitnahmerad des Spindeltrommelantriebs gekoppelt ist.

Ein derartiges Mitnahmerad könnte exzentrisch zum Antriebsverbindungselement angeordnet sein und beispielsweise das Antriebsverbindungselement im Abstand von seiner Achse antreiben.

Eine besonders einfache und insbesondere auch spielfreie und drehsteife Verbindung sieht jedoch vor, dass das Mitnahmerad koaxial zur Spindeltrommelachse angeordnet ist.

Besonders zweckmäßig ist es dabei, wenn die Spindeltrommel durch das Antriebsverbindungselement synchron zum Mitnahmerad antreibbar ist.

Hinsichtlich der Verbindung zwischen dem Mitnahmerad und dem Antriebsverbindungselement wurden ebenfalls keine näheren Angaben gemacht.

So sieht eine vorteilhafte Lösung vor, dass das Mitnahmerad drehfest jedoch kippmomentenfrei mit dem Antriebsverbindungselement gekoppelt ist, das heißt, dass das Antriebsverbindungselement sich relativ zu einer Radachse des Mitnahmerads geringfügig gegenüber der Radachse verkippen kann, beispielsweise um einen Winkel von bis zu +/- 5°.

Zweckmäßigerweise ist hierzu das Mitnahmerad über eine formschlüssige, jedoch Kippbewegungen zulassende Kupplung drehfest mit dem Antriebsverbindungselement gekoppelt.

Eine vorteilhafte Ausbildung sieht vor, dass das Mitnahmerad einen hülsenförmigen Fortsatz aufweist, über welchen eine drehfeste Kopplung mit dem Antriebsverbindungselement erfolgt.

Hinsichtlich der weiteren Ausbildung des Mitnahmerads wurden bislang keine näheren Angaben gemacht.

Um jedoch über ein Stangenlademagazin Werkstoffstangen den Werkstückspindeln zuführen zu können, ist vorzugsweise vorgesehen, dass das Mitnahmerad koaxial zu den Spindelachsen der Werkstückspindeln angeordnete Durchführungen für Werkstoffstangen aufweist.

Um ferner auch vorteilhafterweise das Stangenlademagazin mit der Spindeltrommel mitdrehen zu können, ist vorzugsweise vorgesehen, dass das Mitnahmerad einen Mitnehmer für ein Stangenlademagazin aufweist, so dass mit dem Mitnahmerad und synchron zu diesem auch das Stangenlademagazin mit der Spindeltrommel mitgedreht werden kann.

Hinsichtlich der Ausbildung eines Antriebsgehäuses des Spindeltrommelantriebs wurden bislang keine näheren Angaben gemacht.

So sieht eine vorteilhafte Lösung vor, dass der Spindeltrommelantrieb ein Antriebsgehäuse aufweist, welches fest mit dem Maschinengestell verbunden ist.

Dadurch ist eine stabile Anordnung des Antriebsgehäuses relativ zum Maschinengestell gegeben.

Insbesondere ist vorgesehen, dass das Antriebsgehäuse eine zentrale Ausnehmung aufweist, in welcher das Mitnahmerad angeordnet ist.

Vorzugsweise ist dabei die zentrale Ausnehmung im Antriebsgehäuse so ausgebildet, dass diese eine der Spindeltrommel zugewandte Öffnung aufweist, deren Öffnungsdurchmesser größer ist als ein maximaler radialer Abstand der Durchführungen des Mitnahmerads von der Spindeltrommelachse.

Ferner ist vorzugsweise vorgesehen, dass die zentrale Ausnehmung im Antriebsgehäuse eine der Spindeltrommel abgewandte Öffnung aufweist, deren Öffnungsdurchmesser größer ist als ein maximaler radialer Abstand der Durchführungen des Mitnahmerads von der Spindeltrommelachse.

Im Fall, dass das Antriebsrad Durchführungen für Werkstoffstangen aufweist, ist vorzugsweise vorgesehen, dass der hülsenförmige Fortsatz des Antriebsrads radial innerhalb der Durchführungen des Antriebsrads angeordnet ist.

Hinsichtlich der Möglichkeiten der Lagerung des Mitnahmerads im Antriebsgehäuse wurden bislang keine näheren Angaben gemacht.

So sieht eine vorteilhafte Lösung vor, dass das Mitnahmerad umfangsseitig in dem Antriebsgehäuse gelagert ist.

Ferner wurden auch hinsichtlich der Art des Antriebs des Mitnahmerads keine näheren Angaben gemacht.

Besonders zweckmäßig ist es dabei, wenn das Mitnahmerad durch eine Umfangsverzahnung antreibbar ist.

Der Antrieb des Mitnahmerads könnte direkt über einen Trommelantriebsmotor erfolgen.

Besonders vorteilhaft ist es, wenn das Mitnahmerad über eine Getriebeeinheit durch einen am Antriebsgehäuse gehaltenen Trommelantriebsmotor antreibbar ist.

Hinsichtlich der Anordnung des Trommelantriebsmotors sind die unterschiedlichsten Lösungen denkbar.

Aus Gründen optimaler räumlicher Verhältnisse ist es vorteilhaft, wenn der Trommelantriebsmotor auf einer einer Maschinengestellbasis des Maschinengestells abgewandten Seite des Antriebsgehäuses angeordnet ist.

Hinsichtlich der Ausbildung des Spindeltrommelgehäuses wurden bislang keine näheren Angaben gemacht.

So sieht eine zweckmäßige Lösung vor, dass in dem Spindeltrommelgehäuse in einer oder in mehreren der Werkstückspindelstationen mindestens ein Werkzeugträger vorgesehen ist.

Noch vorteilhafter ist es jedoch, wenn in dem Spindeltrommelgehäuse in einer oder in mehreren der Werkstückspindelstationen zwei Werkzeugträger vorgesehen sind, um eine optimale Bearbeitung des Werkstücks durchführen zu können.

Das Vorsehen von einem oder mehreren Werkzeugträgern hängt primär von der Art der herzustellenden Teile ab und ist daher einsatzabhängig.

Die Werkzeugträger können dabei in unterschiedlichster Art und Weise an dem Spindeltrommelgehäuse gelagert sein.

Besonders vorteilhaft ist eine Lösung, bei welcher jeder Werkzeugträger von einer parallel zur Spindeltrommelachse durch das Spindeltrommelgehäuse verlaufenden und in diesem geführten Pinole gehalten ist.

Insbesondere besteht bei der erfindungsgemäßen Lösung die Möglichkeit, allen Werkstückspindelstationen mindestens einen Werkzeugträger der an einer Pinole geführt ist oder zwei Werkzeugträger, die jeweils an einer Pinole geführt sind, zuzuordnen, um somit in jeder Werkstückspindelstation die optimalen Bearbeitungsmöglichkeiten zur Verfügung zu haben.

Hinsichtlich der Ausbildung der Pinole wurden dabei keine näheren Angaben gemacht.

Eine vorteilhafte Lösung sieht jedoch vor, dass jeder Pinole ein Verschiebeantrieb zugeordnet ist, durch welchen die Pinole relativ zum Spindeltrommelgehäuse und parallel zur Spindeltrommelachse verschiebbar ist.

Vorzugsweise ist der Verschiebeantrieb für jede Pinole ebenfalls in dem Spindeltrommelgehäuse vorgesehen und aufgrund der Tatsache, dass der Spindeltrommelantrieb außerhalb des Spindeltrommelgehäuses angeordnet ist, besteht die Möglichkeit, auch die Verschiebeantriebe für die Pinolen in dem Spindeltrommelgehäuse optimal anzuordnen.

Weitere Merkmale und Vorteile der Erfindung sind Gegenstand der nachfolgenden Beschreibung sowie der zeichnerischen Darstellung eines Ausführungsbeispiels einer erfindungsgemäßen Mehrspindeldrehmaschine.

In der Zeichnung zeigen:
- Fig. 1: eine Seitenansicht geschnitten längs Linie 1-1 eines Ausführungsbeispiels der erfindungsgemäßen Mehrspindeldrehmaschine;
- Fig. 2: einen Schnitt längs Linie 2-2 in Fig. 3;
- Fig. 3: eine Frontansicht von Spindeltrommel und Spindeltrommelgehäuse in Richtung des Pfeils A in Fig. 1;

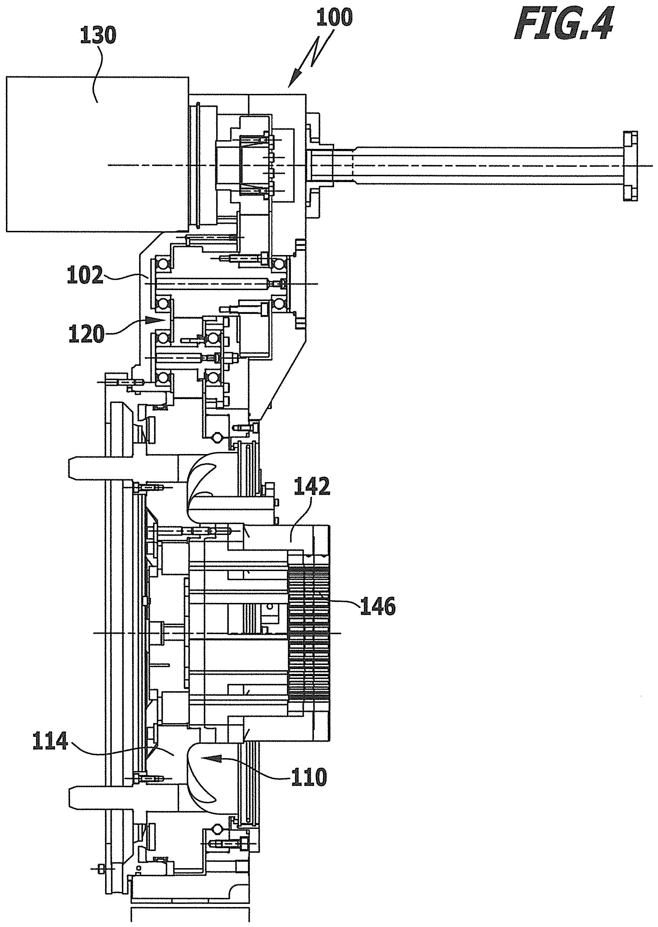

- Fig. 4: einen vergrößerten Schnitt durch einen erfindungsgemäßen Spindeltrommelantrieb und
- Fig. 5: eine Draufsicht auf den Spindeltrommelantrieb und die erfindungsgemäße Mehrspindeldrehmaschine in Richtung des Pfeils B in Fig. 1.

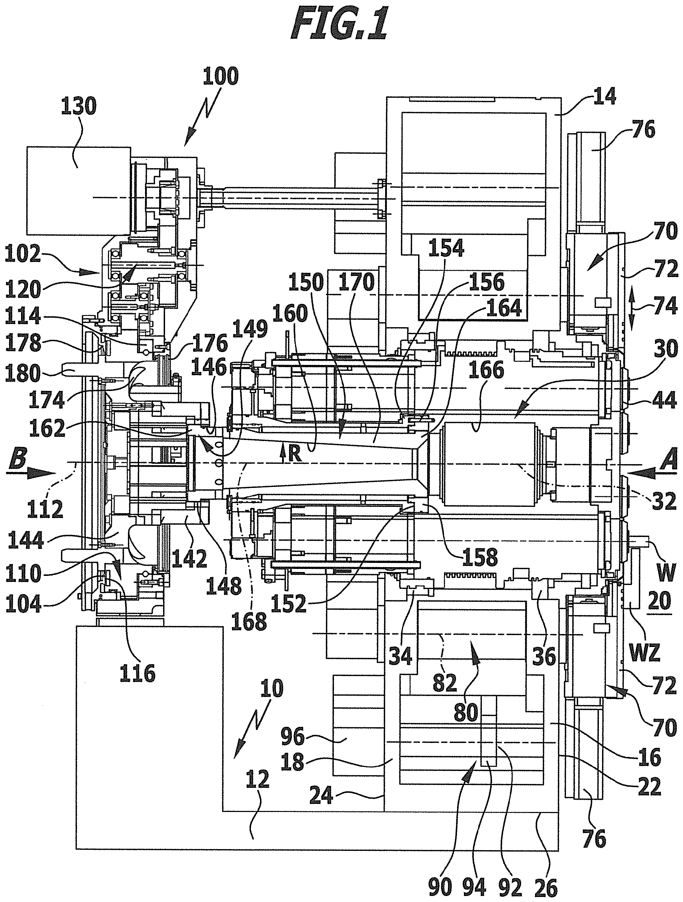

Ein in Fig. 1 dargestelltes Ausführungsbeispiel einer erfindungsgemäßen Mehrspindeldrehmaschine umfasst ein Maschinengestell 10, welches eine Maschinengestellbasis 12 aufweist, auf welcher ein Spindeltrommelgehäuse 14, umfassend eine Frontwand 16 und eine Rückwand 18, angeordnet ist, wobei das Spindeltrommelgehäuse 14 eine einem Arbeitsraum 20 der Mehrspindeldrehmaschine zugewandte Frontseite 22 sowie eine dem Arbeitsraum 20 abgewandte Rückseite 24 aufweist, wobei sich die Frontwand 16 und die Rückwand 18 quer zur Maschinengestellbasis 12 und von dieser weg nach oben erstrecken, und wobei das Spindeltrommelgehäuse 14 mit einer Unterseite 26 auf der Maschinengestellbasis 12 aufsitzt.

In dem Spindeltrommelgehäuse 14 ist eine als Ganzes mit 30 bezeichnete Spindeltrommel gelagert, die um eine Spindeltrommelachse 32 relativ zum Spindeltrommelgehäuse 14 drehbar ist.

Die Lagerung der Spindeltrommel 30 erfolgt dabei über umfangsseitig der Spindeltrommel 30 angeordnete Spindeltrommellager 34 und 36, an der Frontwand 16 bzw. der Rückwand 18 die die Spindeltrommel 30 zwar um die Spindeltrommelachse 32 drehbar, jedoch in Richtung der Spindeltrommelachse 32 unverschieblich lagern.

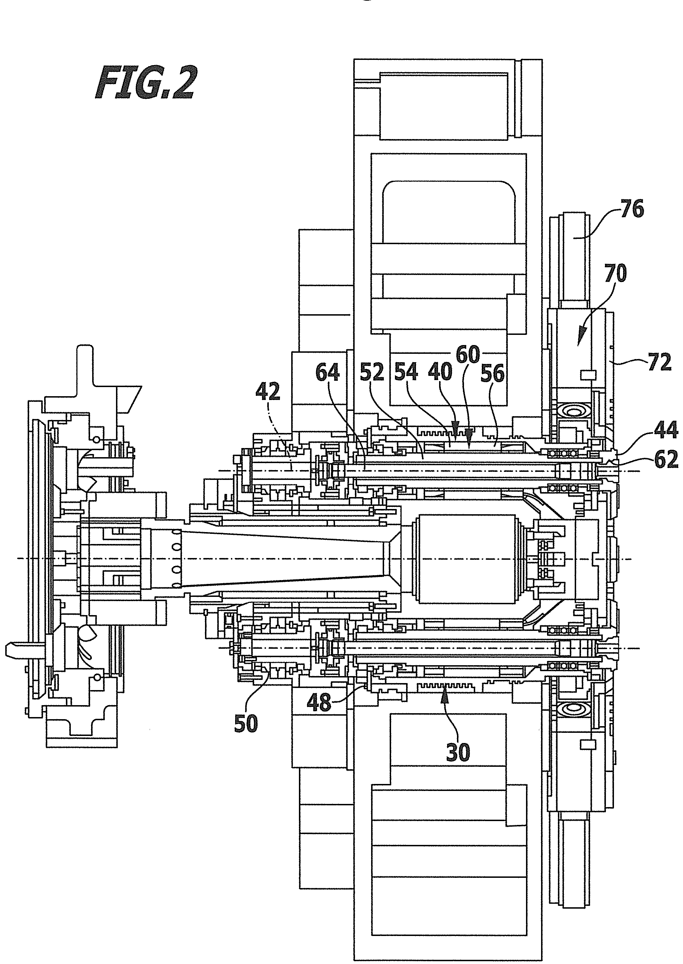

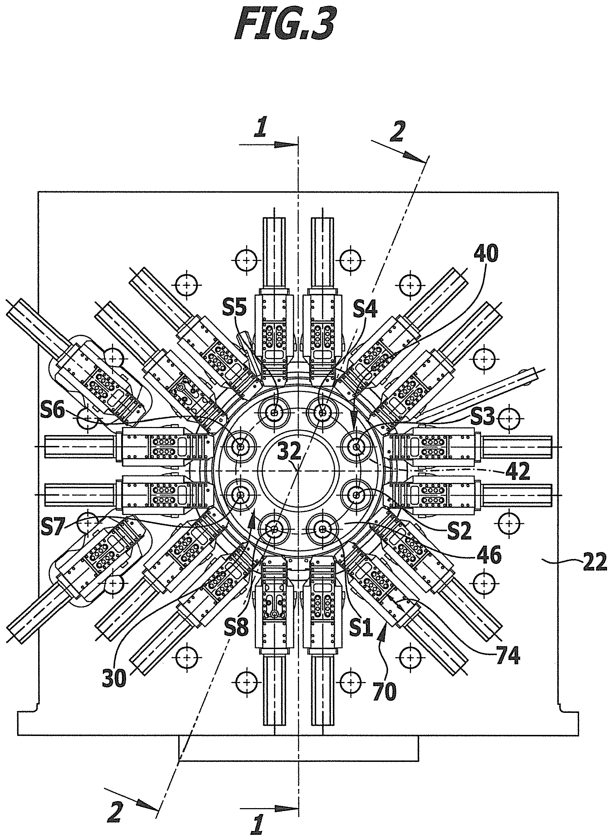

In der Spindeltrommel 30 sind, wie in insbesondere in Fig. 2 und 3 dargestellt, eine Vielzahl von Werkstückspindeln 40, beispielsweise acht Werkstückspindeln 40, um die Spindeltrommelachse 32 herum vorzugsweise in gleichen Winkelabständen und in gleichem radialen Abstand angeordnet, so dass zur Spindeltrommelachse 32 parallel verlaufende Werkstückspindelachsen 42 der Werkstückspindeln 40 einen konstanten radialen Abstand von der Spindeltrommelachse 32 und einen konstanten Winkelabstand voneinander aufweisen.

Wie ferner in Fig. 2 dargestellt, weist jede der Werkstückspindeln 40 einen Werkstückspindelkopf 44 auf, der der Arbeitsraum 20 zugeordnet ist und im Bereich einer Frontseite 46 liegt, vorzugsweise über diese übersteht, wobei die Frontseite 46 der Spindeltrommel 30 ebenfalls dem Arbeitsraum 20 zugewandt ist.

Ausgehend von dem Werkstückspindelkopf 44 erstreckt sich jede der Werkstückspindel 40 in Richtung ihrer Werkstückspindelachse 42 durch die Spindeltrommel 30 hindurch bis zu einem an einer Rückseite 48 der Spindeltrommel 30 angeordneten Spannantrieb 50.

Ferner weist jede der Werkstückspindeln 40 ein Spindelrohr 52 auf, welches drehbar in der Spindeltrommel 30 gelagert ist und welches einen Rotor 54 eines als Ganzes mit 60 bezeichneten Spindelmotors trägt, dessen Stator 56 stationär in der Spindeltrommel 30 angeordnet ist.

Das Spindelrohr 52 trägt dabei im Bereich des Spindelkopfes 44 eine Spanneinrichtung 62 für ein Werkstück W die durch den Spannantrieb 50 betätigbar ist.

Außerdem weist jede der Werkstückspindeln 40 sowie jeder einer der Werkstückspindeln 40 zugeordnete Spannantrieb 50 einen zentralen Durchlass 64 auf, durch welchen eine Werkstücke bildende Werkstoffstange hindurchschiebbar ist, so dass eine Werkstoffstange durch den Spannantrieb 50 hindurch in die Werkstückspindel 40 einschiebbar ist und durch diese hindurch bis zum Spannelement 62 bewegbar ist, so dass die Werkstoffstange letztlich mit einem das Werkstück bildenden Abschnitt zur Bearbeitung über den Spindelkopf 44 übersteht und durch das Spannelement 62 zur Bearbeitung fixierbar ist.

Wie in Fig. 3 dargestellt, ist die Spindeltrommel 30 um die Spindeltrommelachse 32 im Spindeltrommelgehäuse 14 drehbar, und zwar vorzugsweise so, dass die Werkstückspindeln 40 in definiert vorgegebenen Spindelstationen, beispielsweise den Spindelstationen S1 bis S8, stehen und bei einem Weiterdrehen der Spindeltrommel 30 wiederum in einer der Spindelstationen S1 bis S8 stehen, allerdings die jeweilige Werkstückspindel 40 nicht in derselben Spindelstation S1 bis S8 sondern in einer anderen der Spindelstationen S1 bis S8 steht. Beispielsweise erfolgt ein Weiterschalten der Spindeltrommel 30 derart, dass jede der Werkstückspindeln 40 sukzessive alle Spindelstationen S1 bis S8 durchwandert, es ist aber auch eine andere Weiterschaltung der Spindeltrommel 30 dergestalt möglich, dass beispielsweise eine Werkstückspindel 40 die Spindelstationen S1, S3, S5 und S7 sukzessive durchwandert, während eine andere Werkstückspindel die Spindelstationen S2, S4, S6 und S8 durchwandert. Andere Weiterschaltungen sehen einen Betrieb als Doppel-Vierspindler vor.

Zum Bearbeiten der in den Werkstückspindeln 40 aufgenommenen Werkstücke W in den Spindelstationen S1 bis S8 ist jeder der Spindelstationen S1 bis S8 mindestens ein Werkzeugträger 70 zugeordnet, welcher die zur Drehbearbeitung des Werkstücks W erforderlichen Werkzeuge WZ trägt.

Im dargestellten Ausführungsbeispiel der erfindungsgemäßen Mehrspindeldrehmaschine gemäß Fig. 3 sind jeder der Spindelstationen S1 bis S8 zwei derartige Werkzeugträger 70 zugeordnet, die jeweils vor einer Frontseite 22 des Spindeltrommelgehäuses 14 angeordnet sind.

Jeder der Werkzeugträger 70 weist beispielsweise einen X-Schlitten 72 auf, der in einer Verschieberichtung 74 linear bewegbar ist, die radial zur Werkstückspindelachse 42 der in der jeweiligen Spindelstation S1 bis S8 stehenden Werkstückspindel 40 verläuft.

Hierzu ist an dem Werkzeugträger 70 ein X-Verschiebeantrieb 76 vorgesehen.

Ferner ist, wie beispielsweise in Fig. 1 dargestellt, jeder dieser Werkzeugträger 70 an einer Pinole 80 angeordnet, welche die Spindeltrommel 30 mit einer parallel zur Spindeltrommelachse 32 verlaufenden Pinolenachse 82 durchsetzt, wobei die Pinole 80 beispielsweise in dem Spindeltrommelgehäuse 14, beispielsweise in der Frontwand 16 und der Rückwand 18 des Spindeltrommelgehäuses 14, in Richtung der Pinolenachse 82 verschiebbar gelagert ist, so dass der gesamte Werkzeugträger 70 durch Bewegung längs der Pinolenachse 82 relativ zu der in der jeweiligen Spindelstation S1 bis S8 stehenden Werkstückspindeln 40 in einer Z-Richtung bewegbar ist, so dass insgesamt ein auf dem X-Schlitten 72 sitzendes Werkzeug WZ relativ zum zu bearbeitenden Werkstück in der jeweiligen Werkstückspindel 40 der entsprechenden Spindelstation S1 bis S8 mindestens in einer X-Richtung durch den X-Schlitten 72 als auch in einer Z-Richtung durch Verschieben des gesamten Werkzeugträgers 70 mit der Pinole 80 längs der Pinolenachse 82 bewegbar ist.

Zur Verschiebung der Pinole 80 längs der Pinolenachse 82 ist ein als Ganzes mit 90 bezeichneter Z-Verschiebeantrieb vorgesehen, welcher eine das Spindeltrommelgehäuse 14 durchsetzende Verschiebespindel 92 aufweist, deren Spindelmutter 94 mit der Pinole 80 gekoppelt ist und zwischen der Frontwand 16 und der Rückwand 18 des Spindeltrommelgehäuses 14 sitzt. Die Verschiebespindel 92 ist ferner durch einen Z-Antriebsmotor 96 antreibbar, der an der Rückseite 24 des Spindeltrommelgehäuses 14 angeordnet ist.

Um den im Spindeltrommelgehäuse 14 vorhandenen Raum zur Anordnung von Pinolen 80 und Z-Verschiebeantrieben 90 für eine optimale Zahl oder eine maximale Zahl von Werkzeugträgern 70 ausnutzen zu können, ist ein als Ganzes mit 100 bezeichneter Spindeltrommelantrieb im Abstand von der Rückseite 24 des Spindeltrommelgehäuses 14 und auch im Abstand von der Rückseite 48 der Spindeltrommel 30 angeordnet, welcher ein Antriebsgehäuse 102 aufweist, das auf der Maschinengestellbasis 12 angeordnet ist.

In dem Antriebsgehäuse 102 ist in einer zentralen Ausnehmung 104 ein Mitnahmerad 110 angeordnet, welches um eine Radachse 112 drehbar ist, die koaxial zur Spindeltrommelachse 32 angeordnet ist.

Dabei ist das Mitnahmerad 110 umfangsseitig in einem Mitnahmeradlager 114 des Antriebsgehäuses 102 gelagert und weist eine auch in der zentralen Ausnehmung 104 angeordnete Umfangsverzahnung 116 zum Antrieb desselben auf.

Ferner ist in dem Antriebsgehäuse 102 eine Getriebeeinheit 120 vorgesehen, die einerseits über die Umfangsverzahnung 116 das Mitnahmerad 110 antreibt und andererseits durch einen Trommelantriebsmotor 130 antreibbar ist.

Vorzugsweise ist aus räumlichen Gründen der Trommelantriebsmotor 130 an dem Antriebsgehäuse 102 auf einer der Maschinengestellbasis 12 abgewandten Seite angeordnet und auch die Getriebeeinheit 120 liegt auf einer der Maschinengestellbasis 12 abgewandten Seite des Mitnahmerads 110 und zwischen dem Mitnahmerad 110 und dem Trommelantriebsmotor 130.

Zum Drehantrieb der Spindeltrommel 30 durch das Mitnahmerad 110 ist das Mitnahmerad 110 mit einem hülsenförmigen Fortsatz 142 versehen, der sich ausgehend von einem Radkörper 144 des Mitnahmerads 110 in Richtung der Spindeltrommel 30 erstreckt und in einem der Spindeltrommel 30 zugewandten Endbereich eine Innenverzahnung 146 trägt.

Mit der Innenverzahnung 146 kämmt eine Außenverzahnung 148 eines als Ganzes mit 150 bezeichneten Antriebsverbindungselements, welches sich von dem hülsenförmigen Fortsatz 142 des Mitnahmerads 110 bis zu der Spindeltrommel 30 erstreckt und mit der Spindeltrommel 30 drehfest verbindbar ist (Fig. 1 und 2).

Die Innenverzahnung 146 und die Außenverzahnung 148 bilden dabei eine drehfeste, jedoch als Kippgelenk 149 wirkende Verbindung, welche geringfügige Verkippungen des Antriebsverbindungselements 150 relativ zu dem Mitnahmerad 110 zulässt.

Die drehfeste Verbindung mit der Spindeltrommel 30 erfolgt in einem radial innerhalb der Spannantriebe 50 der Werkstückspindel 40 liegenden Innenbereich 152 der Spindeltrommel 30, und zwar ebenfalls mittels eines Kippgelenks 154, welches beispielsweise durch einen Stift 156 gebildet ist, der in eine Bohrung eines in dem Innenbereich 152 liegenden Antriebsrings 158 der Spindeltrommel 30 eingreift, so dass auch durch dieses Kippgelenk 154 eine drehfeste Verbindung zwischen dem Antriebsverbindungselement 150 und der Spindeltrommel 30 besteht, die allerdings eine geringfügige Verkippung des Antriebsverbindungselements 150 relativ zur Spindeltrommelachse 32 beispielsweise um Winkel von plus/minus 5° zulässt.

Vorzugsweise ist das Antriebsverbindungselement 150 als Hohlkörper ausgebildet, der einen zentralen Durchlasskanal 160 aufweist, welcher sich von dem mitnahmeradseitigen Ende 162 des Antriebsverbindungselements bis zum spindeltrommelseitigen Ende 164 des Antriebsverbindungselements 150 erstreckt und zu beiden Seiten hin offen ist, so dass von Seiten des hülsenförmigen Fortsatzes 142 des Mitnahmerads 110 oder durch mantelseitige Öffnungen des Antriebsverbindungselements 150 durch das Antriebsverbindungselement 150 hindurch Leitungen bis in einen zentralen Innenraum 166 der Spindeltrommel geführt werden können, der die Spindeltrommelachse 32 umgibt.

Derartige Leitungen dienen beispielsweise zum Betrieb der Spindelmotoren 60 sowie der Spannantriebe 50, die mit der Spindeltrommel 30 mitdrehend an dieser angeordnet sind.

Das Antriebsverbindungselement 150 umfasst vorzugsweise einen um eine Mittelachse 168 rohrförmig verlaufenden umfangsseitig geschlossener Mantelkörper 170, der eine torsionsfreie Drehmomentübertragung von dem Mitnahmerad 110 zu der Spindeltrommel 30 erlaubt.

Ferner erstreckt sich das Antriebsverbindungselement 150 - bis auf geringe Verkippungen - mit seiner Mittelachse 168 koaxial zur Spindeltrommelachse 32 und dessen Mantelkörper 170 weist ausgehend von der Mittelachse 168 einen maximalen Außenradius R auf, der kleiner ist als ein Mindestabstand der Spannantriebe 50 von der Spindeltrommelachse 32 und der Werkstückspindeln 40 von der Spindeltrommelachse 32, so dass das Antriebsverbindungselement 150 kollisionsfrei von dem Spindeltrommelantrieb 100 zur Spindeltrommel 30 geführt werden kann.

Um die Möglichkeit zu eröffnen - wie eingangs beschrieben - zur Bildung von Werkstücken Werkstoffstangen durch den zentralen Durchlass 64, der sowohl die Spannantriebe 50 als auch das Spindelrohr 52 durchsetzt, zuzuführen, ist das Mitnahmerad 110 seinerseits mit Durchführungen 174 versehen, die bei mit der Spindeltrommel 30 drehfest gekoppeltem Mitnahmerad 110 koaxial zu den Werkstückspindelachse 42 und fluchtend mit den Durchlässen 64 angeordnet sind, so dass Werkstoffstangen von einem auf einer der Spindeltrommel 30 abgewandten Seite des Antriebsrads 110 angeordneten Seite vorgesehenen Stangenlademagazin durch die Durchführungen 174 des Antriebsrads 110 hindurch bis in die Werkstückspindeln 40 und durch deren Durchlässe 64 hindurch geführt werden können.

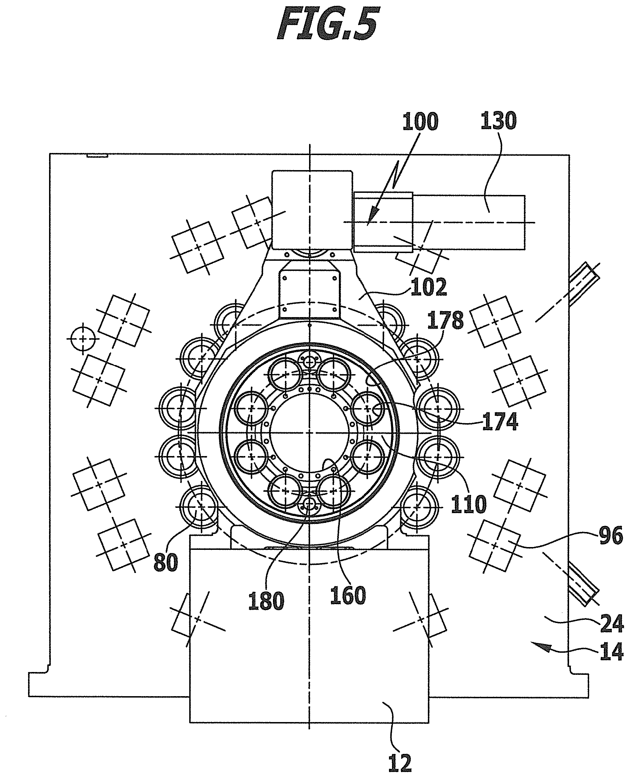

Damit seitens des Antriebsgehäuses 102 keine Behinderung der Durchführung von Werkstoffstangen durch die Durchbrüche 164 entsteht, ist die zentrale Ausnehmung 104 im Antriebsgehäuse 102 mit einer der Spindeltrommel 30 zugewandten Öffnung 176 und einer der Spindeltrommel 30 abgewandten Öffnung 178 im Antriebsgehäuse 102 vorgesehen, deren Radius ausgehend von der Radachse 112 größer ist als ein maximaler Abstand der Durchführungen 174 von der Radachse 112 des Mitnahmerads 110, wie in Fig. 5 dargestellt.

Um ein Stangenlademagazin durch das Mitnahmerad 110 mitdrehen zu können, ist das Mitnahmerad 110 vorzugsweise noch mit Mitnehmern 180 verbunden, die eine drehfeste Verbindung zu einem Stangenlademagazin erlauben und insbesondere erlauben, das Stangenlademagazin mit dem Mitnahmerad 110 und somit auch mit der Spindeltrommel 30 synchron mitzudrehen, um somit von dem Stangenlademagazin ausgehend, Werkstoffstangen den einzelnen Werkstückspindeln 40 zuführen zu können.

## Patentansprüche

1. Mehrspindeldrehmaschine umfassend
ein Maschinengestell (10) mit einem Spindeltrommelgehäuse (14) eine in dem Spindeltrommelgehäuse (14) um eine Spindeltrommelachse (32) drehbar gelagerte Spindeltrommel (30), in welcher eine Vielzahl von Werkstückspindeln (40) um die Spindeltrommelachse (32) herum angeordnet ist, welche ihrerseits um Spindelachsen (42) drehbar sind und mit Werkstückspindelköpfen (44) einem vor einer Frontseite (46) der Spindeltrommel (30) und vor einer Frontseite (22) des Spindeltrommelgehäuses (14) angeordneten Arbeitsraum (20) zugewandt sind, und einen Spindeltrommelantrieb (100) zum Drehen der Spindeltrommel (30) um die Spindeltrommelachse (32), wobei der Spindeltrommelantrieb (100) auf einer dem Arbeitsraum (20) abgewandten Seite des Spindeltrommelgehäuses (14) und im Abstand von einer Rückseite (18) des Spindeltrommelgehäuses (14) angeordnet ist und wobei der Spindeltrommelantrieb (100) zum Antrieb der Spindeltrommel (30) auf diese in einem radial innerhalb der Werkstückspindeln (40) liegenden Innenbereich (152) wirkt, dass der Spindeltrommelantrieb (100) über ein Antriebsverbindungselement (150) auf den Innenbereich (152) der Spindeltrommel (30) zum Antrieb derselben wirkt,
**dadurch gekennzeichnet, dass** das Antriebsverbindungselement (150) einen einen zentralen Durchlasskanal (160) umschließenden Mantelkörper (170) aufweist und dass durch den Durchlasskanal (160) Leitungen zu der Spindeltrommel (30) geführt sind.

2. Mehrspindeldrehmaschine nach Anspruch 1, **dadurch gekennzeichnet, dass** das Antriebsverbindungselement (150) mit einem Mitnahmerad (110) des Spindeltrommelantriebs (100) gekoppelt ist, dass insbesondere das Mitnahmerad (110) koaxial zur Spindeltrommelachse (32) angeordnet ist, dass insbesondere das Mitnahmerad (110) koaxial zu den Spindelachsen (42) der Werkstückspindeln (40) angeordnete Durchführungen (174) für Werkstoffstangen aufweist.

3. Mehrspindeldrehmaschine nach Anspruch 1 oder 2, **dadurch gekennzeichnet, dass** der Spindeltrommelantrieb (100) auf einer der Frontseite (46) der Spindeltrommel (30) abgewandten Rückseite (48) der Spindeltrommel (30) und im Abstand von der Rückseite (48) der Spindeltrommel (30) angeordnet ist.

4. Mehrspindeldrehmaschine nach Anspruch 3, **dadurch gekennzeichnet, dass** das Antriebsverbindungselement (150) direkt drehfest mit der Spindeltrommel (30) gekoppelt ist.

5. Mehrspindeldrehmaschine nach einem der voranstehenden Ansprüche, **dadurch gekennzeichnet, dass** das Antriebsverbindungselement (150) drehfest, jedoch kippmomentenfrei mit der Spindeltrommel (30) verbunden ist.

6. Mehrspindeldrehmaschine nach einem der voranstehenden Ansprüche, **dadurch gekennzeichnet, dass** das Antriebsverbindungselement (150) als Hohlkörper ausgebildet ist und dass insbesondere das Antriebsverbindungselement (150) als hülsenartiger Hohlkörper ausgebildet ist.

7. Mehrspindeldrehmaschine nach einem der voranstehenden Ansprüche, **dadurch gekennzeichnet, dass** der Mantelkörper (170) drehverwindungssteif ausgebildet ist.

8. Mehrspindeldrehmaschine nach einem der voranstehenden Ansprüche, **dadurch gekennzeichnet, dass** das Antriebsverbindungselement (150) einen Außenradius aufweist, der kleiner ist als ein Mindestabstand der Werkstückspindeln (40) von der Spindeltrommelachse (32).

9. Mehrspindeldrehmaschine nach einem der Ansprüche 4 bis 8, **dadurch gekennzeichnet, dass** das Antriebsverbindungselement (150) einen Außenradius aufweist, der kleiner ist als ein Mindestabstand von Spannantrieben (50) der Werkstückspindeln (40) von der Spindeltrommelachse (32).

10. Mehrspindeldrehmaschine nach einem der Ansprüche 1 bis 9, **dadurch gekennzeichnet, dass** das Mitnahmerad (110) drehfest jedoch kippmomentenfrei mit dem Antriebsverbindungselement (150) gekoppelt ist.

11. Mehrspindeldrehmaschine nach einem der voranstehenden Ansprüche, **dadurch gekennzeichnet, dass** das Mitnahmerad (110) einen hülsenförmigen Fortsatz (142) aufweist, über welchen eine drehfeste Kopplung mit dem Antriebsverbindungselement (150) erfolgt.

12. Mehrspindeldrehmaschine nach einem der voranstehenden Ansprüche, **dadurch gekennzeichnet, dass** der Spindeltrommelantrieb (100) ein Antriebsgehäuse (102) aufweist, welches fest mit dem Maschinengestell (10) verbunden ist.

13. Mehrspindeldrehmaschine nach Anspruch 12, **dadurch gekennzeichnet, dass** das Antriebsgehäuse (102) eine zentrale Ausnehmung (104) aufweist, in welcher das Mitnahmerad (110) angeordnet ist und dass insbesondere die zentrale Ausnehmung (104) im Antriebsgehäuse (102) eine der Spindeltrommel (30) zugewandte Öffnung (176) aufweist, deren Öffnungsdurchmesser größer ist als ein maximaler radialer Abstand der Durchführungen (174) des Mitnahmerads (110) von der Spindeltrommelachse (32).

14. Mehrspindeldrehmaschine nach Anspruch 13, **dadurch gekennzeichnet, dass** die zentrale Ausnehmung (104) im Antriebsgehäuse (102) eine der Spindeltrommel (30) abgewandte Öffnung (178) aufweist, deren Öffnungsdurchmesser größer ist als ein maximaler radialer Abstand der Durchführungen (174) des Mitnahmerads (110) von der Spindeltrommelachse (32).

15. Mehrspindeldrehmaschine nach einem der Ansprüche 12 bis 14, **dadurch gekennzeichnet, dass** das Mitnahmerad (110) umfangsseitig in dem Antriebsgehäuse (102) gelagert ist.

16. Mehrspindeldrehmaschine nach einem der voranstehenden Ansprüche, **dadurch gekennzeichnet, dass** das Mitnahmerad (110) durch eine Umfangsverzahnung (116) antreibbar ist und dass insbesondere das Mitnahmerad (110) über eine Getriebeeinheit (120) durch einen am Antriebsgehäuse (102) gehaltenen Trommelantriebsmotor (130) antreibbar ist.

## Claims

1. Multi-spindle turning machine, comprising
a machine frame (10) having a spindle drum housing (14), a spindle drum (30) mounted in the spindle drum housing (14) for rotation about a spindle drum axis (32), said spindle drum (30) having a plurality of workpiece spindles (40) arranged therein about the spindle drum axis (32), said workpiece spindles (40) in turn being rotatable about spindle axes (42) and having workpiece spindle heads (44) thereof in facing relationship with a workspace (20) arranged forward of a front side (46) of the spindle drum (30) and forward of a front side (22) of the spindle drum housing (14), and a spindle drum drive (100) for rotating the spindle drum (30) about the spindle drum axis (32), wherein the spindle drum drive (100) is arranged at a side of the spindle drum housing (14) facing away from the workspace (20) and is arranged at a distance from a rear side (18) of the spindle drum housing (14), and wherein for driving the spindle drum (30), the spindle drum drive (100) acts on the spindle drum (30) in an inner area (152) thereof lying radially inside of the workpiece spindles (40), and wherein for driving the spindle drum (30), the spindle drum drive (100) acts on the inner area (152) of the spindle drum (30) via a drive connecting element (150),
**characterized in that** the drive connecting element (150) has a shell body (170) surrounding a central passageway (160) and **in that**, through the passageway (160), lines are routed to the spindle drum (30).

2. Multi-spindle turning machine in accordance with claim 1, **characterized in that** the drive connecting element (150) is coupled to a driver wheel (110) of the spindle drum drive (100), and in particular **in that** the driver wheel (110) is arranged coaxially with the spindle drum axis (32), and in particular **in that** the driver wheel (110) has feedthroughs (174) for material bars, said feedthroughs (174) being arranged coaxially with the spindle axes (42) of the workpiece spindles (40).

3. Multi-spindle turning machine in accordance with claim 1 or 2, **characterized in that** the spindle drum drive (100) is arranged at a rear side (48) of the spindle drum (30) facing away from the front side (46) of the spindle drum (30) and is arranged at a distance from the rear side (48) of the spindle drum (30).

4. Multi-spindle turning machine in accordance with claim 3, **characterized in that** the drive connecting element (150) is coupled directly to the spindle drum (30) in rotationally fixed relation therewith.

5. Multi-spindle turning machine in accordance with any one of the preceding claims, **characterized in that** the drive connecting element (150) is connected to the spindle drum (30) in a manner that is rotationally fixed but free of tilt moment.

6. Multi-spindle turning machine in accordance with any one of the preceding claims, **characterized in that** the drive connecting element (150) is configured in the form of a hollow body, and in particular **in that** the drive connecting element (150) is configured as a sleeve-like hollow body.

7. Multi-spindle turning machine in accordance with any one of the preceding claims, **characterized in that** the shell body (170) has a torsionally stiff configuration.

8. Multi-spindle turning machine in accordance with any one of the preceding claims, **characterized in that** the drive connecting element (150) has an outer radius that is smaller than a minimum distance of the workpiece spindles (40) from the spindle drum axis (32).

9. Multi-spindle turning machine in accordance with any one of claims 4 to 8, **characterized in that** the drive connecting element (150) has an outer radius that is smaller than a minimum distance of clamp drives (50) of the workpiece spindles (40) from the spindle drum axis (32).

10. Multi-spindle turning machine in accordance with any one of claims 1 to 9, **characterized in that** the driver wheel (110) is coupled to the drive connecting element (150) in a manner that is rotationally fixed but free of tilt moment.

11. Multi-spindle turning machine in accordance with any one of the preceding claims, **characterized in that** the driver wheel (110) has a sleeve-shaped extension (142) via which rotationally fixed coupling to the drive connecting element (150) is realized.

12. Multi-spindle turning machine in accordance with any one of the preceding claims, **characterized in that** the spindle drum drive (100) has a drive housing (102) which is fixedly connected to the machine frame (10).

13. Multi-spindle turning machine in accordance with claim 12, **characterized in that** the drive housing (102) has a central recess (104) in which the driver wheel (110) is arranged, and in particular **in that** the central recess (104) in the drive housing (102) has an opening (176) facing towards the spindle drum (30), the opening diameter of said opening (176) being larger than a maximum radial distance of the feedthroughs (174) of the driver wheel (110) from the spindle drum axis (32).

14. Multi-spindle turning machine in accordance with claim 13, **characterized in that** the central recess (104) in the drive housing (102) has an opening (178) facing away from the spindle drum (30), the opening diameter of said opening (178) being larger than a maximum radial distance of the feedthroughs (174) of the driver wheel (110) from the spindle drum axis (32).

15. Multi-spindle turning machine in accordance with any one of claims 12 to 14, **characterized in that** the driver wheel (110) is circumferentially supported in the drive housing (102).

16. Multi-spindle turning machine in accordance with any one of the preceding claims, **characterized in that** the driver wheel (110) is drivable by way of a circumferential toothing (116), and in particular **in that** the driver wheel (110) is drivable via a gear unit (120) by a drum drive motor (130) held on the drive housing (102).

## Revendications

1. Tour multibroche comprenant
un bâti de machine (10) pourvu d'un boîtier de tambour porte-broche (14), un tambour porte-broche (30) monté de manière à pouvoir tourner autour d'un axe de tambour porte-broche (32) dans le boîtier de tambour porte-broche (14), à l'intérieur duquel est disposée une pluralité de broches porte-pièce à usiner (40) tout autour de l'axe de tambour porte-broche (32), lesquelles peuvent être tournées, quant à elles, autour d'axes de broche (42) et sont orientées, par des têtes de broche porte-pièce à usiner (44), vers un espace de travail (20) disposé devant une face frontale (46) du tambour porte-broche (30) et devant une face frontale (22) du boîtier de tambour porte-broche (14), et un entraînement de tambour porte-broche (100) servant à faire tourner le tambour porte-broche (30) autour de l'axe de tambour porte-broche (32),
dans lequel l'entraînement de tambour porte-broche (100) étant disposé sur une face, opposée à l'espace de travail (20), du boîtier de tambour porte-broche (14) et à distance d'une face arrière (18) du boîtier de tambour porte-broche (14), et dans lequel l'entraînement de tambour porte-broche (100) servant à entraîner le tambour porte-broche (30) agit sur une zone intérieure (152) située radialement à l'intérieur des broches porte-pièce (40), que l'entraînement de tambour porte-broche (100) agit, par l'intermédiaire d'un élément de liaison d'entraînement (150), sur la zone intérieure (152) du tambour porte-broche (30) aux fins de l'entraînement de celui-ci, **caractérisé en ce que** l'élément de liaison d'entraînement (150) présente un corps d'enveloppe (170) entourant un canal de passage (160) central, et **en ce que** des conduites menant au tambour porte-broche (30) sont guidées à travers le canal de passage (160).

2. Tour multibroche selon la revendication 1, **caractérisé en ce que** l'élément de liaison d'entraînement (150) est couplé à une roue entraîneuse (110) de l'entraînement de tambour porte-broche (100), et **en ce qu'**en particulier la roue entraîneuse (110) est disposée de manière coaxiale par rapport à l'axe de tambour porte-broche (32), **en ce qu'**en particulier la roue entraîneuse (110) présente des passages (174), disposés de manière coaxiale par rapport aux axes de broche (42) des broches porte-pièce à usiner (40), pour des barres de matériau.

3. Tour multibroche selon la revendication 1 ou 2, **caractérisé en ce que** l'entraînement de tambour porte-broche (100) est disposé sur une face arrière (48), opposée à la face avant (46) du tambour porte-broche (30), du tambour porte-broche (30) et à distance de la face arrière (48) du tambour porte-broche (30).

4. Tour multibroche selon la revendication 3, **caractérisé en ce que** l'élément de liaison d'entraînement (150) est couplé directement de manière solidaire en rotation au tambour porte-broche (30).

5. Tour multibroche selon l'une quelconque des revendications précédentes, **caractérisé en ce que** l'élément de liaison d'entraînement (150) est relié de manière solidaire en rotation, toutefois sans couple de basculement, au tambour porte-broche (30).

6. Tour multibroche selon l'une quelconque des revendications précédentes, **caractérisé en ce que** l'élément de liaison d'entraînement (150) est réalisé sous la forme d'un corps creux et **en ce qu'**en particulier l'élément de liaison d'entraînement (150) est réalisé sous la forme d'un corps creux de type douille.

7. Tour multibroche selon l'une quelconque des revendications précédentes, **caractérisé en ce que** le corps d'enveloppe (170) est réalisé de manière résistante à la torsion en rotation.

8. Tour multibroche selon l'une quelconque des revendications précédentes, **caractérisé en ce que** l'élément de liaison d'entraînement (150) présente un rayon extérieur, qui est inférieur à une distance minimale des broches porte-pièce à usiner (40) par rapport à l'axe de tambour porte-broche (32).

9. Tour multibroche selon l'une quelconque des revendications 4 à 8, **caractérisé en ce que** l'élément de liaison d'entraînement (150) présente un rayon extérieur, qui est inférieur à une distance minimale des entraînements de serrage (50) des broches porte-pièce à usiner (40) par rapport à l'axe de tambour porte-broche (32).

10. Tour multibroche selon l'une quelconque des revendications 1 à 9, **caractérisé en ce que** la roue entraîneuse (110) est couplée de manière solidaire en rotation, toutefois sans couple de basculement, à l'élément de liaison d'entraînement (150).

11. Tour multibroche selon l'une quelconque des revendications précédentes, **caractérisé en ce que** la roue entraîneuse (110) présente un prolongement (142) en forme de douille, par l'intermédiaire duquel un couplage solidaire en rotation à l'élément de liaison d'entraînement (150) a lieu.

12. Tour multibroche selon l'une quelconque des revendications précédentes, **caractérisé en ce que** l'entraînement de tambour porte-broche (100) présente un boîtier d'entraînement (102), qui est relié de manière solidaire au châssis de machine (10).

13. Tour multibroche selon la revendication 12, **caractérisé en ce que** le boîtier d'entraînement (102) présente un évidement (104) central, dans lequel la roue entraîneuse (110) est disposée, et **en ce qu'**en particulier l'évidement central (104) présente, dans le boîtier d'entraînement (102), une ouverture (176) tournée vers le tambour porte-broche (30), dont le diamètre d'ouverture est plus grand qu'une distance radiale maximale des passages (174) de la roue entraîneuse (110) par rapport à l'axe de tambour porte-broche (32).

14. Tour multibroche selon la revendication 13, **caractérisé en ce que** l'évidement (104) central présente, dans le boîtier d'entraînement (102), une ouverture (178) opposée au tambour porte-broche (30), dont le diamètre d'ouverture est plus grand qu'une distance radiale maximale des passages (174) de la roue entraîneuse (110) par rapport à l'axe de tambour porte-broche (32).

15. Tour multibroche selon l'une quelconque des revendications 12 à 14, **caractérisé en ce que** la roue entraîneuse (110) est montée sur le côté périphérique dans le boîtier d'entraînement (102).

16. Tour multibroche selon l'une quelconque des revendications précédentes, **caractérisé en ce que** la roue entraîneuse (110) peut être entraînée par une denture périphérique (116), et **en ce qu'**en particulier la roue entraîneuse (110) peut être entraînée par un moteur d'entraînement de tambour (130) maintenu au niveau du boîtier d'entraînement (102) par l'intermédiaire d'une unité de transmission (120).
